# EUROPEAN PATENT APPLICATION

(11) **EP 3 617 538 A1**
(43) Date of publication of application: **04.03.2020**
(21) Application number: 18382627.0
(22) Date of filing: 28.08.2018
(51) Int. Cl.: F16D 13/52, F16D 13/64, F16D 13/68, F16D 25/0638

(54) **VEHICLE CLUTCH**

(71) Applicant: XIU RDI, S.L., 17243 Llambilles (Girona) (ES)
(72) Inventor: SERRA ROQUETA, Josep, 17243 LLAMBILLES (Girona) (ES)
(74) Representative: Herrero & Asociados, S.L.

(57) **Abstract**

The vehicle clutch comprises a plurality of discs (9), one part of which comprises an outer toothing and another part of which comprises an inner toothing, and is characterised in that the discs (9) are placed between two pressure plates (5) which are the same with respect to one another, and the clutch further comprises a hub (7) that engages with the inner toothing of said discs (9).

It allows a vehicle clutch to be provided, in particular a multidisc clutch, the cost of which will be reduced.

## Description

The present invention relates to a vehicle clutch, in particular to a multidisc clutch for motorcycles.

### Background of the invention

Multidisc clutches used in vehicles function according to the same principle as that of conventional clutches, only that instead of a single disc, they use a plurality of discs.

First discs comprise an outer toothing and second discs, intercalated between the first discs, comprise an inner toothing, these discs being placed between an axle box and a pressure plate.

This disc pack in idle mode is pressed by a series of helical springs, and as such the pressure plate and the axle box integrally rotate. The use of these types of clutches is usually in motorcycles, since the torque that they transmit to the gearshift is much greater than that produced by the crankshaft due to the primary gear reduction ratio.

Therefore, the coupling must be much more progressive, improving the process by being submerged in oil, which absorbs the heat caused by friction, which is furthermore distributed among several discs.

In any case, normally the discs with outer toothing are made of friction material, as such they are known as friction discs, while the discs intercalated between the same, with inner toothing, are usually steel discs, although there are also clutch mechanisms in which the discs made of friction material and those made of steel have the opposite toothing.

In conventional multidisc clutches, the axle box is a complex piece, which comprises a central portion provided with an outer toothing to engage with the second discs that comprise the inner toothing.

This axle box is more expensive, due to the complexity thereof, which in turn increases the cost of the entire multidisc clutch.

Therefore, one aim of the present invention is to provide a vehicle clutch, in particular a multidisc clutch, the cost of which will be reduced.

### Description of the invention

The clutch of the invention resolves the aforementioned drawbacks and has other advantages which are described below.

The vehicle clutch according to the present invention comprises a plurality of discs, one part of which comprises an outer toothing and another part of which comprises an inner toothing, and is characterised in that the discs are placed between two pressure plates which are the same with respect to one another, and the clutch further comprises a hub that engages with the inner toothing of said discs.

Moreover, the vehicle clutch according to the present invention preferably comprises a plurality of springs that push the pressure plates against one another, which are introduced through holes.

To facilitate cooling, each spring is preferably placed around an inner piece, and according to a preferred embodiment, said inner piece comprises a head and a cylindrical rod. Furthermore, to allow for cooling, each pressure disc comprises a plurality of cooling chambers, said springs placed inside said cooling chambers.

Advantageously, said hub is joined to one of the pressure plates by means of a nut.

The technical advantage achieved with the clutch of the present invention is by applying identical pressure plates on both sides of the disc assembly, substituting said hub for the traditional axle box.

This facilitates the mechanisation and interchangeability to adapt the same clutch to different motorcycles.

Moreover, industrially, the investment in moulds is reduced, since it is simplified into one by the design of both pressure plates, in addition to the savings achieved by doubling the production of the same component.

Moreover, the cooling chambers where the springs are placed in both pressure plates of the clutch are used as inlets for oil to cool the clutch discs. On the other hand, said inner piece is designed to improve the flow of oil inside the cooling chambers.

### Brief description of the drawings

For the purpose of helping to make the foregoing description more readily understandable, it is accompanied by a set of drawings which, schematically and by way of illustration and not limitation, represent an embodiment.
Figure 1 is an exploded perspective view of the vehicle clutch according to the present invention;
Figure 2 is a front view of the vehicle clutch according to the present invention; and
Figure 3 is a cross-sectional view of the vehicle clutch according to the present invention, along the A-A line indicated in Figure 3.

### Description of a preferred embodiment

As shown in the figures, the vehicle clutch according to the present invention comprises a plurality of discs 9 placed next to each other. One part of these discs 9 comprises an inner toothing and another part of the discs 9 comprises an outer toothing, the discs 9 with an inner toothing being intercalated with the discs 9 with an outer toothing, as is known in multidisc clutches.

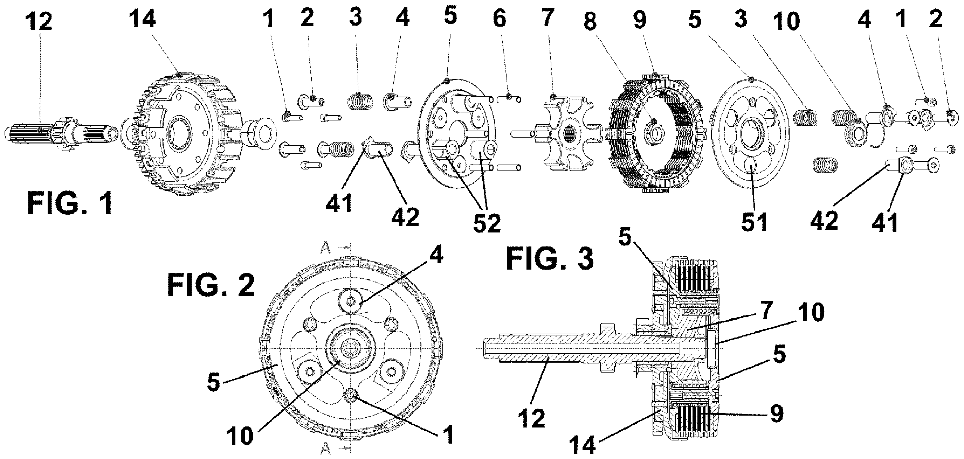

Said discs 9 are placed between two pressure plates 5, which are identical, in order to facilitate the manufacturing thereof, and which are placed in opposite directions, as can be seen in Figure 1.

The vehicle clutch according to the present invention further comprises a hub 7 that engages on the lower part thereof with the inner toothing of the discs 9 by means of pins 6, the hub 7 being fixed to one of the pressure plates 5 (that of the left in Figure 1) by means of a nut 8.

Said hub 7 comprises outer slots to engage with the discs 9 by means of pins 6, which are preferably situated on the ends of arms, as shown in Figure 1.

The disc assembly 9 is pressed between the pressure plates 5 by means of a plurality of screws 1 and bushings 2 that delimit the preloading of the springs 3 for pressing both pressure plates together, in other words, springs 3 press in one direction and other springs 3 press in the other direction.

Each pressure plate 5 comprises a plurality of holes 51 for said springs 3, each one of said holes 51 comprising a cooling chamber 52. Furthermore, each spring 3 is placed around an inner piece 4, which is formed by a head 41 and a cylindrical rod 42.

Figure 1 also shows pins 6 that transmit torque between the discs 9 and the hub 7 and allow the movement of the discs 9 when the clutch is actuated, acting on the pushing plate 10, which is placed in a central hole of one of the pressure plates 5 and disengages the torque transmitted by the primary transmission of the motor to the clutch through the clutch basket 14 to the primary shaft of the gearshift.

For cooling, previously mentioned cooling chambers 52 are used, which are arranged in both pressure plates 5 as inlets for oil to cool the discs 9 of the clutch. The inner piece 4 is especially designed to improve the flow of oil inside the said cooling chambers 52.

As was previously mentioned, the technical advantage achieved with the clutch of the present invention is by applying identical pressure plates on both sides of the disc assembly, substituting the said hub for the traditional axle box, which facilitates the mechanisation and interchangeability for adapting the same clutch to different motorcycles.

It must be mentioned that the functioning of the vehicle clutch according to the present invention is the same as that of multidisc clutches for conventional vehicles, the drive torque of the primary transmission of the engine applied to the clutch basket 14 is transmitted to the primary shaft 12 of the gearshift through the friction of the discs and this transmission is deactivated when the pressure plates move and allows relative movement between the clutch discs.

Despite the fact that reference has been made to a specific embodiment of the invention, it is evident for a person skilled in the art that numerous variations and changes may be made to the clutch described, and that all the aforementioned details may be substituted by other technically equivalent ones, without detracting from the scope of protection defined by the attached claims.

## Claims

1. A vehicle clutch comprising a plurality of discs (9), one part of which comprises an outer toothing and another part of which comprises an inner toothing, **characterised in that** the discs (9) are placed between two pressure plates (5) which are the same with respect to one another, and the clutch further comprises a hub (7) that engages with the inner toothing of said discs (9).

2. The vehicle clutch according to claim 1, wherein the hub (7) engages with the inner toothing of said discs (9) by means of pins (6).

3. The vehicle clutch according to claim 1, which comprises a plurality of springs (3) that push the pressure plates (5) against one another.

4. The vehicle clutch according to claim 3, wherein the two pressure plates (5) comprises holes (51) for the introduction of said springs (3).

5. The vehicle clutch according to claim 3, wherein each spring (3) is placed around an inner piece (4).

6. The vehicle clutch according to claim 5, wherein said inner piece (4) comprises a head (41) and a cylindrical rod (42).

7. The vehicle clutch according to claim 1, wherein said hub (7) is joined to one of the pressure plates (5) by means of a nut (8).

8. The vehicle clutch according to claim 1 or 5, wherein each pressure disc (5) comprises a plurality of cooling chambers (52).

9. The vehicle clutch according to claims 3 and 8, wherein said springs (3) are placed inside said cooling chambers (52).
